# EUROPÄISCHE PATENTSCHRIFT

(11) **EP 2 279 113 B1**
(45) Veröffentlichungstag und Bekanntmachung des Hinweises auf die Patenterteilung: **06.09.2017**
(21) Anmeldenummer: 09765704.3
(22) Anmeldetag: 20.05.2009
(51) Int. Cl.: B63H 5/10, B63H 5/14, B63H 23/24

(54) **STRÖMUNGSMASCHINE MIT ZUMINDEST ZWEI ROTOREN**
TURBINE MOTOR WITH AT LEAST TWO ROTORS
TURBOMACHINE POURVUE DE DEUX ROTORS

(30) Priorität: 27.05.2008 DE 102008025209
(43) Veröffentlichungstag der Anmeldung: 02.02.2011
(73) Patentinhaber: Siemens Aktiengesellschaft, 80333 München (DE)
(72) Erfinder: SCHRÖDER, Dierk, 24238 Selent (DE)
(86) Internationale Anmeldenummer: PCT/EP2009/056137
(87) Internationale Veröffentlichungsnummer: WO 2009/153124

(56) Entgegenhaltungen:
- EP-A1- 2 239 194
- WO-A1-2004/113717
- WO-A1-2005/021373
- WO-A1-2008/087020
- WO-A2-03/025385
- US-A- 4 623 299

## Beschreibung

Die Erfindung betrifft eine Strömungsmaschine gemäß Oberbegriff des Patentanspruchs 1; eine derartige Strömungsmaschine ist beispielsweise durch die WO 03/025385 A2 bekannt.

Aus der US 2006/0063442 A1 ist ein Pod-Antriebssystem mit einem Gehäuse bekannt, das einen rohrförmigen Kanal für ein Strömen eines Fluids durch den Kanal in einer Hauptströmungsrichtung von einem Einlass zu einem Auslass des Kanals ausbildet. Das Pod-Antriebssystem umfasst eine erste und eine zweiten Maschineneinheit mit jeweils einem Rotor, der aus einem äußeren ringförmigen Rotorteil mit einer Ringinnenseite und einer Ringaußenseite und einer zentralen Rotorwelle besteht, wobei zwischen der Ringinnenseite und der zentralen Rotorwelle Schaufeln angeordnet sind. Die zwei Rotoren sind in gleicher und/oder zueinander entgegen gesetzter Richtung drehbar in dem Gehäuse gelagert, wobei der Rotor der ersten Maschineneinheit in dem Kanal in der Hauptströmungsrichtung des Fluids vor dem Rotor der zweiten Maschineneinheit angeordnet ist. Bezüglich der Art des Antriebs der Rotoren sind keine genauen Details offenbart.

WO 03/025385 A2, die als nächstliegender Stand der Technik betrachtet wird, offenbart einen Hydro-Turbinengenerator mit zwei hintereinander angeordneten Rotorscheiben, die jeweils mehrere Rotorflügel aufweisen, die sich radial von einer Rotorwelle erstrecken.

Aus der EP 1 687 201 B1 ist ein Strahlantrieb für Wasserfahrzeuge bekannt, der auf dem Antriebskonzept eines Elektroringmotors beruht. Bei einem derartigen Elektroringmotor handelt es sich um eine elektrische Maschine mit einem ringförmig ausgebildeten Rotor und einem Stator, der ringförmig derart um den Rotor der ersten Maschineneinheit angeordnet ist, dass er mit dem Rotor eine elektrische Maschine bildet. An der Ringinnenseite des Rotors sind Schaufeln angeordnet sind. Der Ausgehend hiervon ist es Aufgabe vorliegender Erfindung, bei einer Strömungsmaschine gemäß Oberbegriff des Patentanspruchs 1 den Wirkungsgrad zu verbessern. Außerdem ist es Aufgabe vorliegender Erfindung, ein Verfahren zum Betrieb einer derartigen Maschine und besonders vorteilhafte Verwendungen anzugeben.

Die Lösung dieser Aufgabe gelingt durch eine Strömungsmaschine gemäß Patentanspruch 1. Vorteilhafte Ausgestaltungen sind Gegenstand der Unteransprüche 2 bis 12. Eine Strömungsmaschine mit mehreren aufeinander folgenden Maschinenstufen ist Gegenstand des Patentanspruchs 13. Ein Verfahren zum Betrieb einer erfindungsgemäßen Strömungsmaschine ist Gegenstand des Patentanspruchs 14. Besonders vorteilhafte Verwendungen der erfindungsgemäßen Strömungsmaschine sind Gegenstand der Patentansprüche 15 bis 19.

Eine erfindungsgemäße Strömungsmaschine umfasst ein Gehäuse, das einen Kanal für ein Strömen eines Fluids durch den Kanal in einer Hauptströmungsrichtung von einem Einlass zu einem Auslass des Kanals ausbildet, und zumindest eine erste und zumindest eine zweite Maschineneinheit, die in dem Kanal in der Hauptströmungsrichtung des Fluids hintereinander angeordnet sind, wobei jede der Maschineneinheiten jeweils einen Rotor aufweist, der ringförmig mit einer Ringinnenseite und einer Ringaußenseite ausgebildet ist, wobei an der Ringinnenseite des Rotors Schaufeln angeordnet sind. Die Rotoren sind dabei in gleicher und/oder zueinander entgegen gesetzter Richtung drehbar in dem Gehäuse gelagert. Auf dem Rotor der ersten Maschineneinheit ist ein Erregersystem angeordnet. Außerdem umfasst die erste Maschineneinheit einen Stator, der ringförmig derart um den Rotor der ersten Maschineneinheit angeordnet ist, dass er mit dem Rotor und dem darauf angeordneten Erregersystem eine elektrische Maschine bildet. Der Rotor der zweiten Maschineneinheit ist dabei unabhängig von dem Rotor der ersten Maschineneinheit drehbar, um eine von dem Rotor der ersten Maschineneinheit verursachte Abströmung des Fluids, die von der Hauptströmungsrichtung abweicht, zumindest teilweise wieder in die Hauptströmungsrichtung umzulenken. Vorzugsweise verläuft hierbei die Hauptströmungsrichtung des Fluids im Bereich eines Rotors in Richtung der Drehachse des Rotors. Der Kanal ist zur Wirkungsgraderhöhung dabei vorzugsweise als ein in Strömungsrichtung konisch zulaufendes Rohr in Form einer Kort-Düse ausgebildet.

Der erste Rotor kann somit gezielt zur Abgabe oder Aufnahme eines Drehmomentes an bzw. von dem Fluid angesteuert werden. Durch den zweiten Rotor kann der verlustbehaftete Drall des Abstromes des ersten Rotors, d.h. Strömungskomponenten des Fluids, die von der Hauptströmungsrichtung abweichen, zumindest teilweise wieder in die Hauptströmungsrichtung umgelenkt und somit in Schub bzw. aufnehmbares Drehmoment eines nachfolgenden Rotors umgewandelt werden. Wenn die Hauptströmungsrichtung in Richtung der Drehachse des Rotors verläuft, kann es sich bei den von der Hauptströmungsrichtung abweichenden Strömungskomponenten beispielsweise um in Bezug auf die Drehachse radiale oder zirkulare Strömungskomponenten handeln. Durch den zweiten Rotor wird somit eine Strömungsumlenkung und ein zumindest teilweiser Momentenausgleich bewirkt.

Durch die ringförmige Ausbildung der Rotoren und der Anordnung des Erregersystems auf dem ringförmigen ersten Rotor kann der Strömungsraum für das Fluid besonders widerstandsarm und strömungsgünstig ausgestaltet werden. Insgesamt wird hierdurch eine gute Nutzung der Fluidströmung und somit ein guter Wirkungsgrad der Strömungsmaschine ermöglicht. Bei dem Fluid kann es sich hierbei um eine Flüssigkeit, eine Emulsion oder um ein Gas handeln.

Durch die relativ großflächig verteilte Anordnung des Erregersystems auf dem ringförmigen Rotor, statt dicht gepackt in einer zentralen Welle, kann durch das vorbeiströmende Fluid eine gute Kühlung des Erregersystems gewährleistet werden. Bei dem Erregersystem kann es sich dabei um eine Anordnung von Permanentmagneten oder um eine Wicklungsanordnung handeln. Durch die Lagerung der Rotoren in dem Gehäuse und den Momentenausgleich können außerdem von der Strömungsmaschine an die Umgebung abgegebene Geräusche und Vibrationen besonders gering gehalten und zudem auch die Kavitation an den Schaufeln der Rotoren verringert werden. Die Schaufeln oder Flügel können hierbei beispielsweise eine axiale oder halbaxiale Form aufweisen.

Durch die ringförmige Ausbildung des Rotors und der Anordnung des Erregersystems auf dem ringförmigen Rotor ist es besonders vorteilhaft möglich, bei den Rotoren auf eine (zentrale) Welle und dafür notwendige Halterungen zu verzichten, die besonders störend für ein durch den Kanal strömendes Fluid sind und den Wirkungsgrad einer Strömungsmaschine verringern. Die Maschineneinheiten sind deshalb frei von einem Bauteil, das entlang der Drehachse ihres jeweiligen Rotors durch diesen hindurch verläuft. Der Verzicht auf eine zentrale Welle hat auch den Vorteil, dass in den Kanal eintretende Fremdkörper sich nur schlecht verkanten können.

Gemäß einer ersten vorteilhaften Ausgestaltung der Erfindung ist auf dem Rotor der zweiten Maschineneinheit kein Erregersystem angeordnet und der Rotor ist in gleicher Richtung wie der Rotor der ersten Maschineneinheit frei drehbar und durch ein strömendes Fluid antreibbar in dem Gehäuse gelagert. Der Rotor der zweiten Maschineneinheit kann somit die Funktion eines Grimschen Leitrades übernehmen, das von der Hauptströmungsrichtung abweichende und somit verlustbehaftete Strömungskomponenten des Abstromes des ersten Rotors zumindest teilweise wieder in die Hauptströmungsrichtung umlenkt.

Gemäß einer zweiten vorteilhaften Ausgestaltung der Erfindung ist auf dem Rotor der zweiten Maschineneinheit ebenfalls ein Erregersystem angeordnet, wobei auch die zweite Maschineneinheit einen Stator umfasst, der ringförmig derart um den Rotor der zweiten Maschineneinheit angeordnet ist, dass er mit dem Rotor und dem darauf angeordneten Erregersystem eine elektrische Maschine bildet, und wobei die Schaufeln oder Flügel des Rotors der zweiten Maschineneinheit eine zu den Schaufeln oder Flügel des Rotors der ersten Maschineneinheit unterschiedliche, vorzugsweise spiegelsymmetrische, Steigung aufweisen. Durch eine Steuerung des von der zweiten Maschineneinheit an das Fluid abgegebenen Drehmomentes bzw. des von der zweiten Maschineneinheit von dem Fluid aufgenommenen Drehmomentes im Zusammenwirken mit der unterschiedlichen Steigung der Schaufeln oder Flügel können von dem Rotor der ersten Maschineneinheit in dem Abstrom der ersten Maschineneinheit erzeugte, von der Hauptströmungsrichtung abweichende Strömungskomponenten gezielt zumindest teilweise wieder in die Hauptströmungsrichtung umgelenkt werden. Die Steuerung kann beispielsweise in Abhängigkeit von den hydrodynamischen Randbedingungen und der konkreten Ausgestaltung der Strömungsmaschine erfolgen. Durch einen optimalen Momentenausgleich zwischen den Maschineneinheiten kann dann die Fluidströmung optimal ausgenutzt werden.

Die Strömungsmaschine kann grundsätzlich auch mehr als zwei Rotoren umfassen, die in dem Kanal in der Hauptströmungsrichtung des Fluides hintereinander angeordnet sind und die je nach den Anforderungen mit einem Stator eine elektrische Maschine bilden oder auch nicht. Bei einem derartigen Verbund von Maschineneinheiten können gezielt einige Rotoren zur Drehmomentabgabe bzw. -aufnahme und andere zum Momentausgleich vorgesehen oder beim Betrieb in entsprechender Weise betrieben werden. Die Strömungsmaschine kann dabei je nach Leistungsanforderung und/oder fluidischen Rahmenbedingungen modular aus einer Mehrzahl standardisierter Maschineneinheiten aufgebaut sein, wobei die Anzahl der Maschineneinheiten geradzahlig oder auch ungeradzahlig sein kann.

Der Strömungswiderstand des Kanals kann besonders klein gehalten werden, wenn die Statoren der Maschineneinheiten in das Gehäuse integriert sind.

Zur weiteren Optimierung des Strömungsverhaltens ist die Steigung der Schaufeln entsprechend der fluidischen Anforderungen vorzugsweise frei veränderbar.

Die elektrische(n) Maschine(n) kann (können) hierbei derart ausgebildet sein, dass sie als Elektromotor betreibbar ist (sind). Der Rotor und der Stator einer derartigen elektrischen Maschine bilden dann einen Elektromotor, der in der Fachliteratur häufig als "Elektroringmotor" oder "RIM-Drive" bezeichnet wird. Hierdurch ist ein Einsatz der Strömungsmaschine beispielsweise als Antriebseinrichtung einer schwimmenden oder tauchenden Einrichtung oder als Pumpe möglich. Bei zwei oder mehr als Elektromotor betriebenen elektrischen Maschinen kann durch eine gezielte Steuerung der elektrischen Maschinen eine von dem Rotor einer oder mehrerer erster Maschineneinheiten verursachte Strömung des Fluids, die von der Hauptströmungsrichtung abweicht, durch den Rotor einer oder mehrerer zweiter Maschineneinheiten gezielt zumindest teilweise wieder in die Hauptströmungsrichtung umgelenkt und somit in Schub umgewandelt werden. Bei zwei als Elektromotor betreibbaren elektrischen Maschinen ist der Antrieb der Strömungsmaschine zudem in hohem Maße redundant und weist eine hohe Verfügbarkeit auf.

Die elektrische(n) Maschine(n) kann (können) hierbei alternativ oder zusätzlich auch derart ausgebildet sein, dass sie als Generator betreibbar ist (sind). Hierdurch ist ein Einsatz der Strömungsmaschine beispielhaft als Turbine bei einem Gezeiten- oder Flussströmungskraftwerk möglich. Bei zwei oder mehr als Generatoren betriebenen elektrischen Maschinen kann durch eine gezielte Steuerung der elektrischen Maschinen eine von einer oder mehreren ersten Maschineneinheiten verursachte Strömung des Fluids, die von der Hauptströmungsrichtung abweicht, durch einen oder mehrere zweite Maschineneinheiten gezielt umgelenkt und in abnehmbares Drehmoment umgewandelt werden.

Gemäß einer besonders vorteilhaften Ausgestaltung der Erfindung sind die Drehmomentabgaben der als Elektromotor betriebenen elektrischen Maschinen bzw. die Drehmomentaufnahmen der als Generator betriebenen elektrischen Maschinen unabhängig voneinander steuerbar. Hierdurch ist es möglich, die Strömungsmaschine an unterschiedliche fluidische Rahmenbedingungen anzupassen und gezielt eine gewünschte Betriebsart der Strömungsmaschine einzustellen (z.B. schuboptimiert, geschwindigkeitsoptimiert, verbrauchsoptimiert, geräuschoptimiert).

Von Vorteil umfasst die Strömungsmaschine eine Steuerungseinrichtung zur Steuerung der Drehmomentabgaben bzw. Drehmomentaufnahmen der elektrischen Maschinen derart, dass die durch die elektrischen Maschinen abgegebenen Drehmomente in einem vorgegebenen Verhältnis zueinander stehen. Derartige Drehmomentverhältnisse können beispielsweise in Abhängigkeit von den fluidischen Rahmenbedingungen, wie z.B. der Strömungsgeschwindigkeit des Fluids oder anderer Parameter (wie z.B. der gewünschten Betriebsart), in Form von Kennlinien in der Steuerungseinrichtung gespeichert sein.

Zur Steuerung der Drehmomentabgaben bzw. Drehmomentaufnahmen kann jede der elektrischen Maschinen zur Stromzufuhr bzw. Stromabgabe elektrisch mit jeweils einem Stromrichter verbunden sein. Mittels eines Stromrichters lässt sich auf einfache und zuverlässige Weise der einer elektrischen Maschine zugeführte bzw. abgeführte Strom und somit das von der elektrischen Maschine abgegebene bzw. aufgenommene Drehmoment steuern.

Die Steuerungseinrichtung kann dann das Verhältnis der Drehmomente durch Steuerung oder Regelung der Stromstärken, mit denen die elektrischen Maschinen beaufschlagt bzw. die von den elektrischen Maschinen abgegeben werden, steuern.

Bevorzugt ist das Verhältnis der aufgebrachten bzw. abgegebenen Drehmomente beim Betrieb der Strömungsmaschine veränderbar. Die Strömungsmaschine kann somit optimal an die im Betrieb jeweils vorherrschenden fluidischen Rahmenbedingungen oder gewünschte Betriebsart angepasst werden.

Vorzugsweise haben die Schaufeln oder Flügel des Rotors der zweiten Maschineneinheit ein zu den Schaufeln oder Flügel des Rotors der ersten Maschineneinheit spiegelsymmetrisches Profil. Es können somit für die erste und zweite Maschineneinheit identische Rotoren zum Einsatz kommen, die zueinander um genau 180°gedreht, d.h. Rücken an Rücken, in Strömungsrichtung hintereinander in dem Kanal angeordnet sind. Bei einem Motorbetrieb der beiden elektrischen Maschinen kann dann ein optimaler Momentausgleich und somit eine Abströmung mit minimalem Drall dadurch auf einfache Weise erzielt werden, dass die beiden elektrischen Maschinen mit einem jeweils gleichen Drehmoment betrieben werden. Dies ist wiederum dadurch einfach möglich, dass die beiden elektrischen Maschinen mit jeweils gleichen Stromstärken betrieben werden. Wenn die Profile und/oder die Steigungen der Schaufeln oder Flügel unterschiedlich sind, bedarf es für einen optimalen Momentenausgleich eines Betriebes der elektrischen Maschinen mit entsprechend unterschiedlichen Drehmomenten bzw. Stromstärken.

Eine erfindungsgemäße Strömungsmaschine kann hierbei auch mehrere aufeinander folgende Maschinenstufen mit jeweils zumindest einer vorstehend beschriebenen ersten und zweiten Maschineneinheit umfassen, wobei die Rotoren aufeinander folgender Maschinenstufen in dem Kanal in Strömungsrichtung des Fluids hintereinander angeordnet sind. Eine Strömungsmaschine kann somit je nach Leistungsanforderung und/oder fluidischen Rahmenbedingungen modular aus mehreren standardisierten Maschinenstufen aufgebaut sein. Bei einem derartigen Verbund von Maschineneinheiten können gezielt einige Maschineneinheiten oder -stufen zur Drehmomentabgabe bzw. -aufnahme und andere zum Momentenausgleich verwendet und somit eine optimale Betriebsweise (z.B. schuboptimiert, geschwindigkeitsoptimiert, geräuschoptimiert) ermöglicht werden.

Ein erfindungsgemäßes Verfahren zum Betrieb einer vorstehend beschriebenen Strömungsmaschine zeichnet sich dadurch aus, dass eine von dem Rotor der ersten Maschineneinheit verursachte Abströmung des Fluids, die von der Hauptströmungsrichtung abweicht, von dem Rotor der zweiten Maschineneinheit zumindest teilweise wieder in die Hauptströmungsrichtung umgelenkt wird.

Es ist dabei zum einen möglich, dass sämtliche elektrischen Maschinen gleichzeitig als Elektromotoren oder gleichzeitig als Generatoren betrieben werden, wobei dann von einem ersten Elektromotor bzw. Generator (und ggf. weitere ersten Elektromotoren bzw. Generatoren) erzeugte, von der Hauptströmungsrichtung abweichende Strömungskomponenten durch einen zweiten Elektromotor bzw. Generator (und ggf. weitere zweite Elektromotoren bzw. Generatoren) wieder in die Hauptströmungsrichtung umgelenkt werden.

Es ist zum anderen aber auch möglich, dass gleichzeitig eine erste elektrische Maschine (und ggf. weitere erste elektrische Maschinen) als Elektromotor und eine zweite elektrische Maschine (und ggf. weitere zweite elektrische Maschinen) zur Energierückgewinnung und Strömungsumlenkung als von dem strömenden Fluid angetriebener Generator (bzw. als ein generatorisch betriebener Elektromotor mit Bremswirkung) betrieben wird.

Da sich eine erfindungsgemäße Strömungsmaschine durch einen hohen Wirkungsgrad, Robustheit, geringe Geräusch- und Körperschallemissionen, ein relativ geringes Gewicht und guten Kavitationseigenschaften auszeichnet, eignet sie sich in besonderem Maße als Vortriebseinrichtung für schwimmende und tauchende Einrichtungen, insbesondere für Unterwasserschiffe.

Weiterhin machen diese Vorteile eine erfindungsgemäße Strömungsmaschine auch besonders geeignet zur Verwendung in einer horizontal und/oder vertikal verdrehbare Antriebsvorrichtung oder als Querstrahl-Antriebsvorrichtung einer schwimmenden oder tauchenden Einrichtung, insbesondere eines Schiffes. Eine vertikale und horizontale Verdrehbarkeit ist hierbei beispielsweise mittels einer kardanischen Aufhängung möglich. Aufgrund ihres relativ einfachen Aufbaus kann eine derartige Antriebsvorrichtung auch aus einem Schiffsrumpf ein- und ausfahrbar und/oder um 360° drehbar ausgebildet sein.

Eine erfindungsgemäße Strömungsmaschine eignet sich aufgrund der vorgenannten Vorteile auch besonders gut zur Verwendung in einer Wasserstrahl (Waterjet)- oder Axialjet-Antriebsvorrichtung einer schwimmenden oder tauchenden Einrichtung, insbesondere eines Schiffes.

Zusätzlich kann eine erfindungsgemäße Strömungsmaschine auch als eine Pumpe, als ein Ventilator- oder ein Verdichter verwendet werden, wobei auch hier ihr hoher Wirkungsgrades, ihre Robustheit und ihre geringen Geräusch- und Körperschallemissionen zum Tragen kommen.

Von besonderem Vorteil kann eine erfindungsgemäße Strömungsmaschine als eine Turbine, aufgrund ihrer Robustheit insbesondere in einem Strömungs- oder Gezeitenkraftwerk, insbesondere auf dem Grund des Meeres, verwendet werden. Eine derartige Turbine kann aber auch zur Stromerzeugung bei schwimmenden oder tauchenden Einrichtungen genutzt werden.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: einen Teillängsschnitt durch eine Strömungsmaschine mit einer elektrischen und einer nicht elektrischen Maschineneinheit,
- FIG 2: einen Teillängsschnitt durch eine Strömungsmaschine mit zwei elektrischen Maschineneinheiten,
- FIG 3: einen Teillängsschnitt durch eine Strömungsmaschine mit drei Stufen mit jeweils zwei Maschineneinheiten,
- FIG 4: eine Prinzipdarstellung einer Strömungsmaschine und der Komponenten zu Steuerung ihrer Drehmomentabgabe bzw. -aufnahme,
- FIG 5: eine Verwendung einer erfindungsgemäßen Strömungsmaschine bei einem Unterwasserschiff und
- FIG 6: eine Verwendung mehrerer erfindungsgemäßer Strömungsmaschinen bei einem Überwasserschiff.

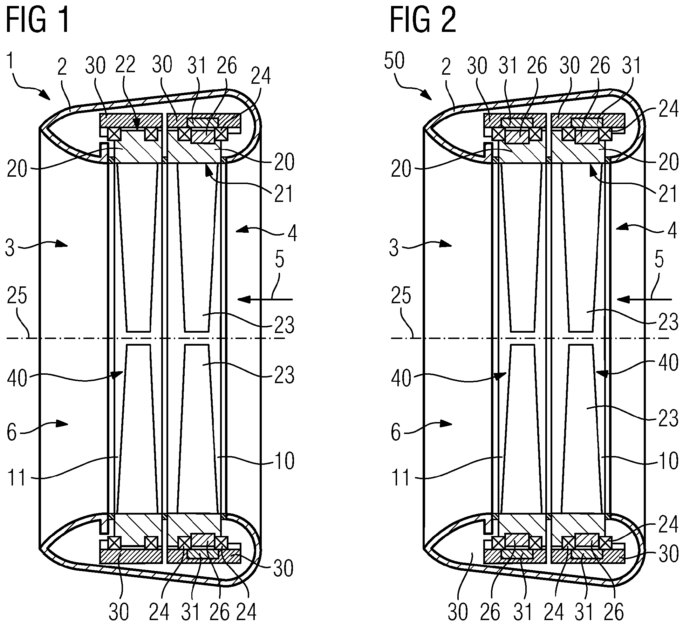

FIG 1 zeigt einen Längsschnitt durch eine erfindungsgemäße Strömungsmaschine 1 mit einem Gehäuse 2, das einen rohrförmigen Kanal 3 für ein Strömen eines Fluids ausbildet. Das Fluid strömt über eine Einlassöffnung 4 in den Kanal 3, durchströmt diesen in einer Hauptströmungsrichtung 5 und verlässt den Kanal 3 über eine Auslassöffnung 6.

Die Strömungsmaschine 1 umfasst zwei Maschineneinheiten 10, 11 mit jeweils einem Rotor 20, der als Hohlzylinder und somit ringförmig mit einer Ringinnenseite 21 und einer Ringaußenseite 22 ausgebildet ist, wobei an der Ringinnenseite 21 des Rotors 20 Schaufeln oder Flügel 23 angeordnet sind. Unter der Ringaußenseite wird hierbei die Seite des Rotors verstanden, die durch die radial äußere Begrenzungsfläche des Rotors 20 definiert ist und unter der Ringinnenseite wird die Seite des Rotors 20 verstanden, die durch die radial innere Begrenzungsfläche des Rotors 20 definiert ist.

Die Rotoren 20 der zwei Maschineneinheiten 10, 11 sind in dem Kanal 3 in Strömungsrichtung des Fluids koaxial hintereinander angeordnet und mit ihrer jeweiligen Ringaußenseite 22 mittels Lager 24 voneinander unabhängig in gleicher und zueinander entgegen gesetzter Richtung um eine gemeinsame Drehachse 25 drehbar in dem Gehäuse 2 gelagert. Die Lagerung kann jedoch grundsätzlich auch mittels Lager erfolgen, die auf der Ringinnenseite oder an einer oder beiden Stirnseiten des ringförmigen Rotors liegen. Die Hauptströmungsrichtung 5 verläuft hierbei in Richtung der Drehachsen 25 der Rotoren 20. Als Lager kommen vorzugsweise Gleitlager zum Einsatz.

Die nach innen in Richtung zur Drehachse 25 gerichtet und gleichförmig in Umfangsrichtung des Rotors 20 verteilt an dessen Ringinnenseite 21 angeordneten Schaufeln oder Flügel 23 rotieren mit dem Rotor 20 mit und sind vorzugsweise in standardisierten Befestigungsvorrichtungen lösbar an dem Rotor 20 befestigt, um sie auswechseln zu können. Die Schaufeln oder Flügel 23 können hierbei beispielsweise eine axiale oder halbaxiale Form aufweisen. Der Rotor 20 kann mit den daran befestigten Schaufeln oder Flügeln 23 beispielsweise einen Impeller ausbilden. Bei der Maschineneinheit 10, deren Rotor 20 in der Hauptströmungsrichtung 5 des Fluids zuerst angeordnet ist, ist auf der Ringaußenseite 22 des Rotors 20 ein Erregersystem 26 angeordnet. Hierbei kann es sich um eine Anordnung von Permanentmagneten oder um ein Wicklungssystem handeln, das in Umfangsrichtung des Rotors 20 verteilt auf dessen Ringaußenseite 22 angeordnet ist.

Die Maschineneinheit 10 umfasst weiterhin einen Stator 30 mit einem statorseitigen Erregersystem 31, wobei der Stator 30 derart angeordnet ist, dass das statorseitige Erregersystem 31 und das rotorseitige Erregersystem 26 elektromagnetisch zusammenwirken, so dass der Stator 30 mit dem Rotor 20 eine elektrische Maschine 40 bildet.

Bei der Maschineneinheit 11, deren Rotor 20 in der Hauptströmungsrichtung 5 des Fluids nach der zuerst angeordneten Maschineneinheit 10 angeordnet ist, ist auf der Ringaußenseite 22 kein Erregersystem angeordnet, sondern deren Rotor 20 ist zum zumindest teilweisen Ausgleich von Drall des Abstromes der ersten Maschineneinheit 10 mittels Lager 24 frei um die Drehachse 25 drehbar in dem Gehäuse 2 gelagert.

Die Strömungsmaschine 1 ist besonders widerstandsarm für das durch den Kanal 3 strömende Fluid ausgeführt. Hierzu sind die Maschineneinheiten 10, 11 frei von einem Bauteil, das entlang der Drehachse 25 ihres jeweiligen Rotors 20 durch diesen hindurch verläuft. Außerdem sind die Statoren 30 der Maschineneinheiten 10, 11 in das Gehäuse 2 der Strömungsmaschine integriert. Weiterhin sind die ringförmigen Rotoren 20 derart ausgebildet, dass der Durchmesser der Ringinnenseite dem Durchmesser des Kanals 3 unmittelbar vor dem jeweiligen Rotor 20 entspricht. Der ringförmige Rotor 20 ist hierzu in dem Gehäuse 2 versenkt angeordnet bzw. bildet mit seiner Ringinnenseite 21 die äußere Begrenzungsfläche des Kanals 3 im Bereich des Rotors 20, wobei diese äußere Begrenzungsfläche mit der angrenzenden, von dem Gehäuse 2 gebildeten äußeren Begrenzungsfläche fluchtet. Die ringförmigen Rotoren 20 selbst stellen somit keinen über die Wandreibung hinausgehenden Strömungswiderstand für das Fluid dar.

Beim Betrieb der Strömungsmaschine 1 wird eine von dem Rotor 20 der in Hauptströmungsrichtung 5 des Fluids zuerst angeordneten Maschineneinheit 10 in dem Abstrom erzeugte, von der Hauptströmungsrichtung 5 abweichende Strömungskomponente des Fluids durch den in der Funktion eines Grimmschen Leitrades frei mitdrehenden Rotor 20 der nachfolgenden Maschineneinheit 11 zumindest teilweise wieder in die Hauptströmungsrichtung 5 des Fluids umgelenkt. Bei einem Motorbetrieb der elektrischen Maschine 40 der ersten Maschineneinheit 10 kann somit ein Drall des Abstromes in zusätzlichen Schub umgewandelt werden. Bei einem Generatorbetrieb der elektrischen Maschine 40 der ersten Maschineneinheit 10 kann ein Drall des Abstromes in zusätzlich abnehmbares Drehmoment umgewandelt werden. Um die Funktion eines Grimschen-Leitrades auszufüllen, sind die Flügel 23 als ein kombiniertes Turbinen- und Propellerrad ausgebildet. Der innere Teil der Flügel 23 ist hierzu als eine Turbinenschaufel und äußere Teil der Flügel 23 als ein Propellerflügel ausgebildet.

Eine in FIG 2 dargestellte Strömungsmaschine 50 unterscheidet sich von der in FIG 1 dargestellten Strömungsmaschine 1 dadurch, dass nun bei beiden Maschineneinheiten 10, 11 auf der Ringaußenseite 22 der Rotoren 20 jeweils ein Erregersystem 26 angeordnet ist, wobei die Maschineneinheiten 10, 11 jeweils einen Stator 30 mit einem statorseitigen Erregersystem 31 umfassen, der derart angeordnet ist, dass das statorseitige Erregersystem 31 und das rotorseitige Erregersystem 26 elektromagnetisch zusammenwirken, so dass der Stator 30 mit dem Rotor 20 der jeweiligen Maschineneinheit 10, 11 eine elektrische Maschine 40 bildet.

Beim Betrieb der Strömungsmaschine 50 wird der von dem Rotor 20 der in Hauptströmungsrichtung 5 des Fluids zuerst angeordneten Maschineneinheit 10 erzeugte Drall des Fluids durch den Rotor 20 der nachfolgenden Maschineneinheit 11 gezielt zumindest teilweise in die Hauptströmungsrichtung 5 des Fluids umgelenkt. Bei einem Motorbetrieb der elektrischen Maschine 40 der ersten Maschineneinheit 10 kann somit der Drall in zusätzlichen Schub umgewandelt werden. Bei einem Generatorbetrieb der elektrischen Maschine 40 der ersten Maschineneinheit 10 kann somit der Drall in zusätzlich aufnehmbares Drehmoment umgewandelt werden.

Es ist dabei zum einen möglich, dass gleichzeitig beide elektrischen Maschinen 40 als Elektromotoren oder gleichzeitig als Generatoren betrieben werden, wobei dann von dem Rotor der ersten Maschineeinheit 10 erzeugte, von der Hauptströmungsrichtung 5 abweichende Strömungskomponenten durch den Rotor der zweiten Maschineneinheit 11 wieder in die Hauptströmungsrichtung 5 umgelenkt werden.

Es ist zum anderen aber auch möglich, dass gleichzeitig die elektrische Maschine 40 der ersten Maschineneinheit 10 als Elektromotor und die elektrische Maschine 40 der zweiten Maschineneinheit 11 zur Energierückgewinnung und Strömungsumlenkung als von dem strömenden Fluid angetriebener Generator betrieben wird.

Die beiden elektrischen Maschinen 40 können hierbei auch auf unterschiedliche Leistungen ausgelegt sein. Beispielsweise kann eine davon auf eine deutlich größere Leistung als die andere ausgelegt sein. Die elektrische Maschine kleinerer Leistung kann dann beispielsweise als kleiner Antrieb zum Bremsen des zugeordneten Rotors dienen, der währen des Betriebs der Strömungsmaschine mit keinem oder nur geringem Antriebsmoment in der Strömung des Fluides mitdreht. Hierdurch kann der Rotor der Maschineneinheit mit kleiner elektrische Leistung beispielsweise ohne die üblicherweise für ein Grimsches-Leitrad notwendige besondere Ausgestaltung der Schaufeln oder Flügel 23 mit nur sehr geringem Antriebsmoment als ein Grimsches-Leitrad betrieben werden. Die Maschineneinheit mit kleiner elektrischer Leistung kann hierbei in Strömungsrichtung 5 des Fluids sowohl vor als auch nach der Maschineneinheit mit großer elektrischer Leistung angeordnet sein.

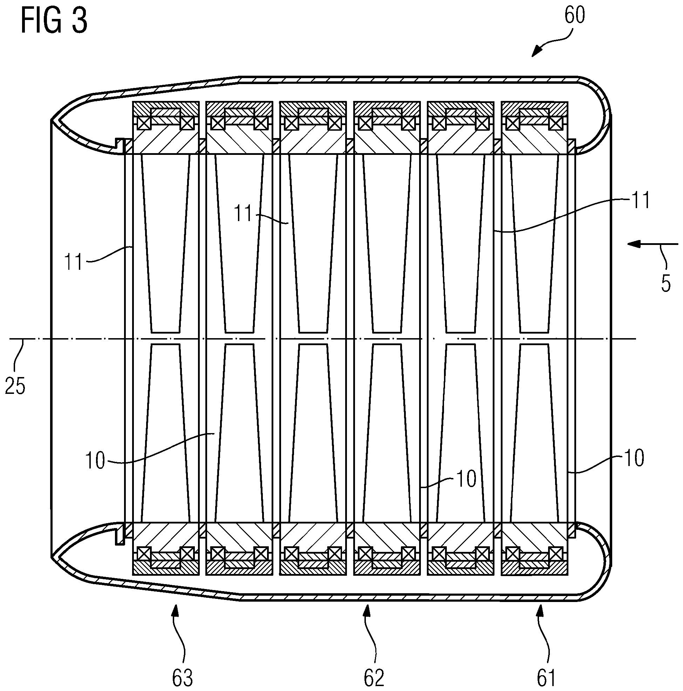

Grundsätzlich kann eine Strömungsmaschine 1 bzw. 50 gemäß FIG 1 bzw. 2 dabei je nach Leistungsanforderung und/oder fluidischen Rahmenbedingungen modular aus einer Anzahl in Strömungsrichtung des Fluids hintereinander angeordneter standardisierter Maschineneinheiten 10, 11 aufgebaut sein, wobei die Gesamtzahl an Maschineneinheiten 10, 11 der Strömungsmaschine 1, 50 geradzahlig oder auch ungeradzahlig sein kann. Grundsätzlich kann - wie in FIG 3 gezeigt - eine Strömungsmaschine 60 auch mehrere aufeinander folgende Maschinenstufen 60, 61, 62 mit jeweils zwei oder mehreren Maschineneinheiten 10, 11 gemäß FIG 1 und 2 umfassen, wobei die Rotoren 20 aufeinander folgender Maschinenstufen 60, 61, 62 in dem Kanal 3 in der Hauptströmungsrichtung 5 des Fluids hintereinander, und vorzugsweise um die gleiche Achse 25 drehbar, angeordnet sind.

Die in FIG 1, 2 und 3 gezeigten elektrischen Maschinen 40 können derart ausgebildet sein, dass sie als Elektromotor betreibbar sind. Die elektrischen Maschinen 40 können auch derart ausgebildet sein, dass sie als Generator betreibbar sind. Bevorzugt sind die elektrischen Maschinen 40 derart ausgebildet, dass sie sowohl als Elektromotor als auch als Generator betreibbar sind. Hierdurch ist die Strömungsmaschine beispielsweise besonders geeignet zur Anwendung in Pumpspeicherkraftwerken. Die Drehmomentabgabe der als Elektromotor betriebenen elektrischen Maschinen bzw. die Drehmomentaufnahmen der als Generator betriebenen elektrischen Maschinen 40 ist hierbei unabhängig voneinander steuerbar. Hierdurch ist es möglich, die Strömungsmaschine an unterschiedliche fluidische Rahmenbedingungen anzupassen und gezielt eine gewünschte Betriebsart der Strömungsmaschine einzustellen (z.B. schuboptimiert, geschwindigkeitsoptimiert, verbrauchsoptimiert, geräuschoptimiert).

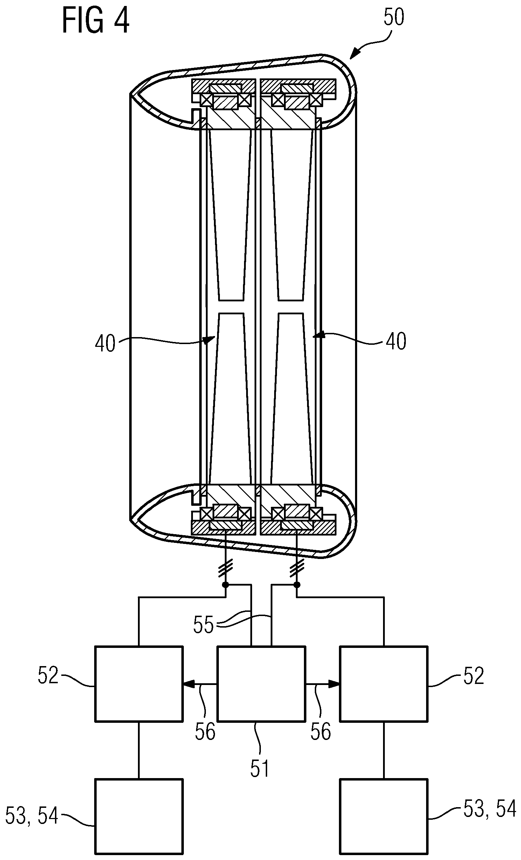

Wie FIG 4 für den Fall der Strömungsmaschine 50 von FIG 2 zeigt, dient im Fall, dass eine Strömungsmaschine zwei oder mehr elektrische Maschinen 40 umfasst, eine Steuerungseinrichtung 51 zur Steuerung der Drehmomentabgaben bzw. Drehmomentaufnahmen der elektrischen Maschinen 40 derart, dass die durch die elektrischen Maschinen 40 abgegebenen bzw. aufgenommenen Drehmomente in einem, insbesondere durch die Fluiddynamik, vorgegebenen Verhältnis zueinander stehen.

Zur Steuerung der Drehmomentabgaben bzw. Drehmomentaufnahmen ist jede der elektrischen Maschinen 40 elektrisch mit jeweils einem Stromrichter 52 verbunden. Bei Motorbetrieb wird jede der elektrischen Maschine 40 über den jeweiligen Stromrichter 52 von einer Energiequelle 53 oder einem Energiespeicher mit elektrischem Strom gespeist. Bei Generatorbetrieb speist jede der elektrischen Maschine 40 über den jeweiligen Stromrichter 52 elektrischen Strom in eine elektrische Last 54 oder einen Energiespeicher.

Die Steuerungseinrichtung 51 steuert die Drehmomente und somit auch das Verhältnis der Drehmomente durch Steuerung der Stromstärken, mit denen die elektrischen Maschinen 40 beaufschlagt bzw. die von den elektrischen Maschinen 40 abgegeben werden. Die Steuerungseinrichtung 51 erfasst diese Stromstärken über Signalleitungen 55 und steuert die Stromrichter 52 über Steuerleitungen 56.

Das Verhältnis der durch die elektrischen Maschinen 40 aufgebrachten bzw. abgegebenen Drehmomente ist somit beim Betrieb der Strömungsmaschine veränderbar. Somit kann das Verhältnis an die fluidischen Rahmenbedingungen und andere Betriebsparameter, wie z.B. eine gewünschte Betriebsart der Strömungsmaschine (z.B. schuboptimiert, geschwindigkeitsoptimiert, verbrauchsoptimiert, geräuschoptimiert), angepasst und ein gewünschter Betriebspunkt der Strömungsmaschine eingestellt werden. Zur Bestimmung des Drehmomentverhältnisses sind in der Steuerungseinrichtung 51 Kennlinien oder Datensätze hinterlegt, die die Abhängigkeit des Drehmomentverhältnisses von den fluidischen Rahmenbedingungen und den Betriebsparametern (z.B. gewünschte Betriebsart) beschreiben. Eine weitere Anpassung der Maschine an geänderte fluidische Rahmenbedingungen ist dadurch möglich, dass die Steigung der Schaufeln veränderbar ist

Die Schaufeln oder Flügel 23 des Rotors 20 der zweiten Maschineneinheit 11 weisen vorzugsweise eine zu den Schaufeln oder Flügel 23 des Rotors 20 der ersten Maschineneinheit 10 spiegelsymmetrische Steigung und spiegelsymmetrisches Profil auf. Es können somit für die erste und zweite Maschineneinheit 10, 11 identische Rotoren 20 zum Einsatz kommen, die zueinander um genau 180°gedreht, d.h. Rücken an Rücken, in Strömungsrichtung 5 hintereinander in dem Kanal 6 angeordnet sind. Bei einem Motorbetrieb der beiden elektrischen Maschinen 40 kann dann ein optimaler Momentausgleich und somit eine Abströmung mit minimalem Drall dadurch auf einfache Weise erzielt werden, dass die beiden elektrischen Maschinen 40 mit einem jeweils gleichen Drehmoment betrieben werden. Dies ist wiederum dadurch einfach möglich, dass die beiden elektrischen Maschinen 40 mit jeweils gleichen Stromstärken betrieben werden. Wenn die Profile und/oder die Steigungen der Schaufeln oder Flügel 23 der beiden Rotoren 20 unterschiedlich sind, bedarf es für einen optimalen Momentenausgleich eines Betriebes der elektrischen Maschinen mit entsprechend unterschiedlichen Drehmomenten bzw. Stromstärken.

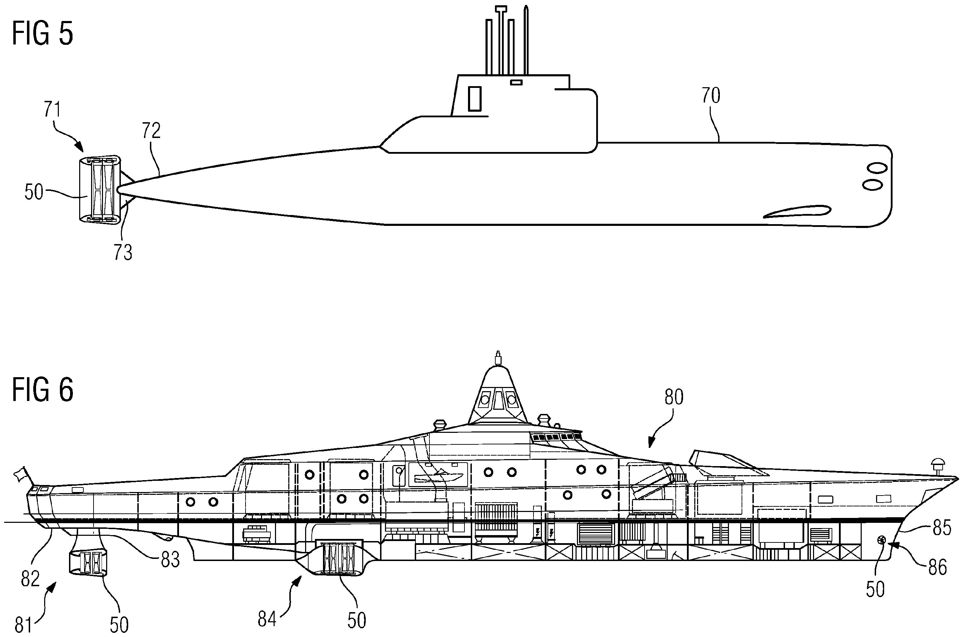

FIG 5 zeigt ein Unterwasserschiff 70, bei dem eine Strömungsmaschine 50 gemäß FIG 2 als Vortriebseinrichtung 71 am Heck 72 des Unterwasserschiffes verwendet wird. Die Strömungsmaschine 50 ist dabei über Maschinenhalterungen 73 am Heck des Unterwasserschiffes 70 befestigt. Da bei der Strömungsmaschine 50 die Rotorschaufeln von einem Gehäuse umgeben sind, zeichnet sich der Antrieb durch eine besonders geringe Geräuscherzeugung aus, was oft insbesondere für Unterwasserschiffe wichtig ist. Die Stromzuführung zu den elektrischen Maschinen kann dabei über die Maschinenhalterungen 73 erfolgen.

An Bord des Unterwasserschiffes 70 befinden sich ein oder mehrere nicht näher dargestellte Generatoren oder andere Stromquellen oder Energiespeicher, wie z.B. Batterien und/oder Brennstoffzellen, die die als Elektromotor betriebenen elektrischen Maschinen der Strömungsmaschine 50 mit Strom versorgen.

FIG 6 zeigt eine Längsschnittdarstellung eines Militärschiffes 80 bei dem eine erste Strömungsmaschine 50 gemäß FIG 2 mit großer Leistung in einer horizontal verdrehbaren Antriebsvorrichtung 81 am Heck 82 des Schiffes verwendet wird. Die Strömungsmaschine ist hierbei drehfest an einem Schaft 83 befestigt, der horizontal drehbar in dem Schiff 80 gelagert ist.

Grundsätzlich kann eine Strömungsmaschine 50 aber auch in einer zusätzlich vertikal oder überhaupt nicht verdrehbaren Antriebsvorrichtung am Heck eines Schiffes verwendet werden.

Weiterhin werden bei dem Schiff 80 eine Strömungsmaschine 50 bestehend aus vier Maschineneinheiten 10, 11 gemäß FIG 2 mit hoher Leistung in einer Axialjet-Antriebsvorrichtung 84 verwendet. Auch eine Wasserstrahl-Antriebsvorrichtung mit einem Strömungsaustritt über der Wasserlinie ist realisierbar.

Außerdem wird eine Strömungsmaschine 50 kleiner Leistung bestehend aus zwei Maschineneinheiten 10, 11 gemäß FIG 2 in einer im Bug 85 des Schiffes 80 angeordneten Querstrahlruder-Antriebsvorrichtung 86 verwendet.

An Bord des Schiffes 80 befinden sich ein oder mehrere Generatoren, die die als Elektromotor betriebenen elektrischen Maschinen der Strömungsmaschinen 50 mit Strom versorgen.

Für den beispielhaft dargestellten Schiffstyp "Korvette" mit seiner Typverdrängung von ca. 2000 to und einer angenommenen Maximalgeschwindigkeit oberhalb von 35 kn besteht in der dargestellten Ausführungsform der Antrieb aus zwei horizontal verdrehbaren Antriebsvorrichtungen 81 und zwei Axialjet-Antriebsvorrichtungen 84.

## Patentansprüche

1. Strömungsmaschine (1,50) mit
- einem Gehäuse (2), das einen Kanal (3) für ein Strömen eines Fluids durch den Kanal (3) in einer Hauptströmungsrichtung (5) von einem Einlass (4) zu einem Auslass (6) des Kanals (3) ausbildet,
- zumindest einer ersten und zumindest einer zweiten Maschineneinheit (10 bzw. 11), die in dem Kanal (3) in der Hauptströmungsrichtung (5) des Fluids hintereinander angeordnet sind, wobei jede der Maschineneinheiten (10 bzw. 11) jeweils einen Rotor (20) aufweist, der ringförmig mit einer Ringinnenseite (21) und einer Ringaußenseite (22) ausgebildet ist, wobei an der Ringinnenseite (21) des Rotors (20) Schaufeln oder Flügel (23) angeordnet sind, und wobei
- die Rotoren (20) der Maschineneinheiten (10,11) in gleicher und zueinander entgegen gesetzter Richtung drehbar in dem Gehäuse (2) gelagert sind, wobei
- auf dem Rotor (20) der ersten Maschineneinheit (10) ein Erregersystem (26) angeordnet ist,
- die erste Maschineneinheit (10) einen Stator (30) umfasst, der ringförmig derart um den Rotor (20) der ersten Maschineneinheit (10) angeordnet ist, dass er mit dem Rotor (20) und dem darauf angeordneten Erregersystem (26) eine elektrische Maschine (40) bildet, und wobei
- der Rotor (20) der zweiten Maschineneinheit (11) unabhängig von dem Rotor (20) der ersten Maschineneinheit (10) drehbar ist, um eine von dem Rotor (20) der ersten Maschineneinheit (10) verursachte Abströmung des Fluids, die von der Hauptströmungsrichtung (5) abweicht, zumindest teilweise wieder in die Hauptströmungsrichtung (5) umzulenken,
**dadurch gekennzeichnet, dass** die Maschineneinheiten (10,11) keine zentrale Rotorwelle aufweisen, so dass sie frei von einem Bauteil sind, das entlang der Drehachse (25) ihres jeweiligen Rotors (20) durch diesen hindurch verläuft.

2. Strömungsmaschine (1,50) nach Anspruch 1, **dadurch gekennzeichnet, dass** auf dem Rotor (20) der zweiten Maschineneinheit (11) kein Erregersystem angeordnet ist und dass der Rotor (20) in gleicher Richtung wie der Rotor (20) der ersten Maschineneinheit (10) frei drehbar und durch ein strömendes Fluid antreibbar in dem Gehäuse (2) gelagert ist.

3. Strömungsmaschine (1,50) nach Anspruch 1, **dadurch gekennzeichnet, dass** auf dem Rotor (20) der zweiten Maschineneinheit (11) ein Erregersystem (26) angeordnet ist, wobei die zweite Maschineneinheit(11) einen Stator (30) umfasst, der ringförmig derart um den Rotor (20) der zweiten Maschineneinheit (11) angeordnet ist, dass er mit dem Rotor (20) und dem darauf angeordneten Erregersystem (26) eine elektrische Maschine (40) bildet, und wobei die Schaufeln oder Flügel (23) des Rotors (20) der zweiten Maschineneinheit (11) eine zu den Schaufeln oder Flügel (23) des Rotors (20) der ersten Maschineneinheit (10) unterschiedliche, vorzugsweise spiegelsymmetrische, Steigung aufweisen.

4. Strömungsmaschine (1,50) nach einem der vorhergehenden Ansprüche, **dadurch gekennzeichnet, dass** die Statoren (30) der Maschineneinheiten (10,11) in das Gehäuse (2) integriert sind.

5. Strömungsmaschine (1,50) nach einem der vorhergehenden Ansprüche, **dadurch gekennzeichnet, dass** die Steigungen der Schaufeln oder Flügel (23) der Rotoren (20) veränderbar ist.

6. Strömungsmaschine (1,50) nach einem der vorhergehenden Ansprüche, **dadurch gekennzeichnet, dass** die elektrische(n) Maschine(n) (40) derart ausgebildet ist (sind), dass sie als Elektromotor und/oder Generator betreibbar ist (sind).

7. Strömungsmaschine (1,50) nach Anspruch 6, **dadurch gekennzeichnet, dass** die Drehmomentabgabe der als Elektromotor betriebenen elektrischen Maschinen (40) bzw. die Drehmomentaufnahme der als Generator betriebenen elektrischen Maschinen (40) unabhängig voneinander steuerbar ist.

8. Strömungsmaschine (1,50) nach Anspruch 7, **gekennzeichnet durch** eine Steuerungseinrichtung (51) zur Steuerung der Drehmomentabgaben bzw. Drehmomentaufnahmen der elektrischen Maschinen (40) derart, dass die durch die elektrischen Maschinen (40) abgegebenen bzw. aufgenommenen Drehmomente in einem vorgegebenen Verhältnis zueinander stehen.

9. Strömungsmaschine (1,50) nach Anspruch 8, **dadurch gekennzeichnet, dass** zur Steuerung der Drehmomentabgaben bzw. Drehmomentaufnahmen jede der elektrischen Maschinen (40) zur Stromzufuhr bzw. Stromabgabe elektrisch mit jeweils einem Stromrichter (52) verbunden ist.

10. Strömungsmaschine (1,50) nach Anspruch 8 oder 9, **dadurch gekennzeichnet, dass** die Steuerungseinrichtung (51) das Verhältnis der Drehmomente durch Steuerung oder Regelung der Stromstärken, mit denen die elektrischen Maschinen (40) beaufschlagt bzw. die von den elektrischen Maschinen abgegeben werden, steuert.

11. Strömungsmaschine (1,50) nach Anspruch 8, 9 oder 10, **dadurch gekennzeichnet, dass** das Verhältnis der abgegebenen bzw. aufgenommenen Drehmomente beim Betrieb der Strömungsmaschine (1,50) veränderbar ist.

12. Strömungsmaschine (1,50) nach einem der vorhergehenden Ansprüche, **dadurch gekennzeichnet, dass** die Schaufeln oder Flügel (23) des Rotors (20) der zweiten Maschineneinheit (11) ein zu den Schaufeln oder Flügel (23) des Rotors (20) der ersten Maschineneinheit (10) spiegelsymmetrisches Profil aufweisen.

13. Strömungsmaschine (1,50) mit mehreren aufeinander folgenden Maschinenstufen (61,62,63) mit jeweils zumindest einer ersten und zumindest einer zweiten Maschineneinheit (10 bzw. 11) nach einem der vorhergehenden Ansprüche, wobei die Rotoren (20) aufeinander folgender Maschinenstufen (61,62,63) in dem Kanal (3) in der Hauptströmungsrichtung (5) des Fluids hintereinander angeordnet sind.

14. Verfahren zum Betrieb einer Strömungsmaschine (1,50,60) nach einem der vorhergehenden Ansprüche, **dadurch gekennzeichnet, dass** eine von dem Rotor (20) der ersten Maschineneinheit (10) verursachte Abströmung des Fluids, die von der Hauptströmungsrichtung (5) abweicht, von dem Rotor (20) der zweiten Maschineneinheit (11) zumindest teilweise wieder in die Hauptströmungsrichtung (5) umgelenkt wird.

15. Verwendung der Strömungsmaschine (1,50,60) nach einem der Ansprüche 1 bis 13 als eine Vortriebseinrichtung (71) für schwimmende oder tauchende Einrichtungen, insbesondere Unterwasserschiffe (70).

16. Verwendung der Strömungsmaschine (1,50,60) nach einem der Ansprüche 1 bis 13 in einer horizontal und/oder vertikal verdrehbaren Antriebsvorrichtung (81) oder in einer Querstrahlruder-Antriebsvorrichtung (86) einer schwimmenden oder tauchenden Einrichtung, insbesondere eines Schiffes (80).

17. Verwendung der Strömungsmaschine (1,50,60) nach einem der Ansprüche 1 bis 13 in einer Wasserstrahl- oder Axialjet-Antriebsvorrichtung (84) einer schwimmenden oder tauchenden Einrichtung, insbesondere eines Schiffes (70,80).

18. Verwendung der Strömungsmaschine (1,50,60) nach einem der Ansprüche 1 bis 13 als eine Pumpe, einen Ventilator oder einen Verdichter.

19. Verwendung der Strömungsmaschine (1,50,60) nach einem der Ansprüche 1 bis 13 als eine Turbine, insbesondere zur Stromerzeugung bei einer schwimmenden oder tauchenden Einrichtung oder in einem Strömungs- oder Gezeitenkraftwerk.

## Claims

1. Turbine machine (1, 50) having
- a housing (2) that forms a duct (3) for a flow of a fluid through the duct (3) in a main flow direction (5) from an inlet (4) to an outlet (6) of the duct (3),
- at least one first and at least one second machine unit (10 and/or 11), arranged one behind the other in the duct (3) in the main flow direction (5) of the fluid, wherein each of the machine units (10 and/or 11) has a rotor (20) of annular design with an annular inner side (21) and an annular outer side (22), wherein blades or vanes (23) are arranged on the annular inner side (21) of the rotor (20), and wherein
- the rotors (20) of the machine units (10, 11) are mounted to rotate in the housing (2) in the same and the opposite direction to one another,
wherein
- an excitation system (26) is arranged on the rotor (20) of the first machine unit (10),
- the first machine unit (10) comprises a stator (30) which is arranged annularly around the rotor (20) of the first machine unit (10) such that it forms an electric machine (40) with the rotor (20) and the excitation system (26) arranged thereon, and wherein
- the rotor (20) of the second machine unit (11) can rotate independently of the rotor (20) of the first machine unit (10) in order to divert an outflow of the fluid caused by the rotor (20) of the first machine unit (10), said outflow differing from the main flow direction (5), at least partly back into the main flow direction (5),
**characterised in that** the machine units (10,11) do not have a central rotor shaft, so that they are devoid of a component running therethrough along the axis of rotation (25) of their respective rotor (20).

2. Turbine machine (1,50) according to claim 1, **characterised in that** no excitation system is arranged on the rotor (20) of the second machine unit (11) and that the rotor (20) is mounted in the housing (2) such that it can rotate freely in the same direction as the rotor (20) of the first machine unit (10) and can be driven by a flowing fluid.

3. Turbine machine (1,50) according to claim 1, **characterised in that** an excitation system (26) is arranged on the rotor (20) of the second machine unit (11), wherein the second machine unit (11) comprises a stator (30) which is arranged annularly around the rotor (20) of the second machine unit (11) such that, with the rotor (20) and the excitation system (26) arranged thereon, it forms an electric machine (40), and wherein the blades or vanes (23) of the rotor (20) of the second machine unit (11) have a preferably mirror-symmetrical pitch different from the blades or vanes (23) of the rotor (20) of the first machine unit (10).

4. Turbine machine (1,50) according to one of the preceding claims, **characterised in that** the stators (30) of the machine units (10,11) are integrated into the housing (2).

5. Turbine machine (1,50) according to one of the preceding claims, **characterised in that** the pitches of the blades or vanes (23) of the rotors (20) are variable.

6. Turbine machine (1,50) according to one of the preceding claims, **characterised in that** the electric machine(s) (40) is/are designed such that it/they can be operated as an electric motor and/or generator.

7. Turbine machine (1,50) according to claim 6, **characterised in that** the torque output of the electric machines (40) operated as an electric motor or the absorbing torque of the electric machines (40) operated as a generator (40) can be controlled independently of one another.

8. Turbine machine (1,50) according to claim 7, **characterised by** a control device (51) for controlling the torque outputs and/or absorbing torques of the electric machines (40) such that the torques output or absorbed by the electric machines (40) are in a predetermined ratio to one another.

9. Turbine machine (1,50) according to claim 8, **characterised in that** for controlling the torque outputs and absorbing torques each of the electric machines (40) is connected electrically in each case to a power converter (52) for the supply or delivery of electricity.

10. Turbine machine (1,50) according to claim 8 or 9, **characterised in that** the control device (51) controls the ratio of the torques by controlling or regulating the current strengths that are to be applied to the electric machines (40) or that are delivered by the electric machines.

11. Turbine machine (1,50) according to claim 8, 9 or 10, **characterised in that** the ratio of the torques output or absorbed can be varied during operation of the turbine machine (1,50).

12. Turbine machine (1,50) according to one of the preceding claims, **characterised in that** the blades or vanes (23) of the rotor (20) of the second machine unit (11) have a profile which is mirror-symmetrical to the blades or vanes (23) of the rotor (20) of the first machine unit (10).

13. Turbine machine (1,50) having a plurality of consecutive machine stages (61,62,63), each having at least one first and at least one second machine unit (10 and/or 11) according to one of the preceding claims, wherein the rotors (20) of consecutive machine stages (61,62,63) are arranged one behind the other in the duct (3) in the main flow direction (5) of the fluid.

14. Method for operating a turbine machine (1,50,60) according to one of the preceding claims, **characterised in that** an outflow of the fluid caused by the rotor (20) of the first machine unit (10), said outflow differing from the main flow direction (5), is diverted at least partly back into the main flow direction (5) by the rotor (20) of the second machine unit (11).

15. Use of the turbine machine (1,50,60) according to one of claims 1 to 13 as a propulsion device (71) for floating or submersible devices, in particular underwater vessels (70).

16. Use of the turbine machine (1,50,60) according to one of claims 1 to 13 in a horizontally and/or vertically rotatable drive device (81) or in a thruster drive device (86) of a floating or submersible device, in particular a ship (80).

17. Use of the turbine machine (1,50,60) according to one of claims 1 to 13 in a water-jet or axial-jet drive device (84) of a floating or submersible device, in particular a ship (70,80).

18. Use of the turbine machine (1,50,60) according to one of claims 1 to 13 as a pump, a fan or a compressor.

19. Use of the turbine machine (1,50,60) according to one of claims 1 to 13 as a turbine, in particular for electricity generation in a floating or submersible device or in a marine current or tidal power station.

## Revendications

1. Turbomachine (1,50) comprenant
- une carcasse (2), qui constitue un conduit (3) pour un courant d'un fluide passant dans le conduit (3), dans un sens (5) d'écoulement principal, d'une entrée (4) à une sortie (6) du conduit (3),
- au moins une première et au moins une deuxième unité (10 et 11) de machine, qui sont montées dans le conduit (3), l'une derrière l'autre, dans le sens (5) d'écoulement principal du fluide, chacune des unités (10 et 11) de machine ayant respectivement un rotor (20), qui est constitué annulairement en ayant un côté (21) intérieur d'anneau et un côté (22) extérieur d'anneau, dans lequel des aubes ou des ailettes (23) sont montées du côté (21) intérieur d'anneau du rotor (20), et dans laquelle
- les rotors (20) des unités (10, 11) de machine sont montés tournant dans la carcasse (2,) dans le même sens ou dans des sens opposés l'un à l'autre,
dans laquelle
- un système (26) d'excitation est monté sur le rotor (20) de la première unité (10) de machine,
- la première unité (10) de machine a un stator (30), qui est disposé annulairement autour du rotor (20) de la première unité (10) de machine, de manière à former, avec le rotor (20) et le système (26) d'excitation qui y est disposé, une machine (40) électrique, et dans laquelle
- le rotor (20) de la deuxième unité (11) de machine peut tourné indépendamment du rotor (20) de la première unité (10) de machine pour dévier, au moins en partie à nouveau, dans le sens (5) d'écoulement principal, une évacuation du fluide, qui s'écarte du sens (5) d'écoulement principal, provoquée par le rotor (20) de la première unité (10) de machine,
**caractérisée en ce que** les unités (10, 11) de machine n'ont pas d'arbre central de rotor, de sorte qu'elles sont sans un élément constitutif, qui s'étend le long de l'axe (25) de rotation de leur rotor respectif en le traversant.

2. Turbomachine (1,50) suivant la revendication 1, **caractérisée en ce qu'**un système d'excitation n'est pas monté sur le rotor (20) de la deuxième unité (11) de machine et **en ce que** le rotor (20) est monté dans la carcasse (2), de manière à pouvoir tourner librement dans le même sens que le rotor (20) de la première unité (10) de machine et à pouvoir être entraîné par un fluide en écoulement.

3. Turbomachine (1,50) suivant la revendication 1, **caractérisée en ce qu'**un système (26) d'excitation est monté sur le rotor (20) de la deuxième unité (11) de machine, la deuxième unité (11) de machine comprenant un stator (30), qui est disposé annulairement autour du rotor (20) de la deuxième unité (11) de machine, de manière à former, avec le rotor (20) et le système (26) d'excitation qui y est monté, une machine (40) électrique, et les aubes ou les ailettes (23) du rotor (20) de la deuxième unité (11) de machine ont un pas, de préférence symétrique comme en un miroir, différent des aubes ou des ailettes (23) du rotor (20) de la première unité (10) de machine.

4. Turbomachine (1,50) suivant l'une des revendications précédentes, **caractérisée en ce que** les stators (30) des unités (10, 11) de machine sont intégrés dans la carcasse (2).

5. Turbomachine (1,50) suivant l'une des revendications précédentes, **caractérisée en ce que** les pas des aubes ou des ailettes (23) des rotors (20) peuvent être modifiés.

6. Turbomachine (1,50) suivant l'une des revendications précédentes, **caractérisée en ce que** la ou les machines (40) électriques est ou sont constituée (s), de manière à pouvoir fonctionner comme moteur électrique et/ou comme génératrice.

7. Turbomachine (1,50) suivant la revendication 6, **caractérisée en ce que** le couple cédé par les machines (40) électriques fonctionnant en moteur électrique ou le couple absorbé par les machines (40) électriques fonctionnant en génératrice peuvent être commandés indépendamment l'un de l'autre.

8. Turbomachine (1,50) suivant la revendication 7, **caractérisée par** un dispositif (51) de commande du couple cédé ou du couple absorbé par les machines électriques, de manière à ce que les couples cédés ou absorbés par les machines (40) électriques soient dans un rapport donné à l'avance.

9. Turbomachine (1,50) suivant la revendication 8, **caractérisée en ce que**, pour commander le couple cédé ou le couple absorbé, chacune des machines (40) électriques est reliée pour l'apport de courant ou pour la cession du courant électriquement à respectivement un convertisseur (52).

10. Turbomachine (1,50) suivant la revendication 8 ou 9, **caractérisée en ce que** le dispositif (51) de commande commande le rapport des couples, en commandant ou en régulant les intensités du courant en lesquelles les machines (40) électriques sont alimentées ou que les machines électriques cèdent.

11. Turbomachine (1,50) suivant la revendication 8, 9 ou 10, **caractérisée en ce que** le rapport des couples cédés ou absorbés peut être modifié lors du fonctionnement de la turbomachine (1,50).

12. Turbomachine (1,50) suivant l'une des revendications précédentes, **caractérisée en ce que** les aubes ou les ailettes (23) du rotor (20) de la deuxième unité (11) de machine ont un profil symétrique comme en un miroir, par rapport aux aubes ou aux ailettes (23) du rotor (20) de la première unité (10) de machine.

13. Turbomachine (1,50) ayant plusieurs étages (61, 62, 63) de machine se succédant, comprenant respectivement au moins une première et au moins une deuxième unités (10 et 11) de machine suivant l'une des revendications précédentes, dans laquelle les rotors (20) d'étages (61, 62, 63) de machine se succédant sont montés dans le conduit (3) les uns derrière les autres dans le sens (5) d'écoulement principal du fluide.

14. Procédé pour faire fonctionner une turbomachine (1, 50, 60) suivant l'une des revendications précédentes, **caractérisé en ce que** l'on dévie, au moins en partie à nouveau dans le sens (5) de l'écoulement principal, par le rotor (20) de la deuxième unité (11) de machine, une évacuation du fluide, qui s'écarte du sens (5) d'écoulement principal, provoquée par le rotor de la première unité (10) de machine.

15. Utilisation de la turbomachine (1, 50, 60) suivant l'une des revendications 1 à 13 comme dispositif (71) de propulsion de dispositifs flottants ou plongeants, notamment de sous-marins (70).

16. Utilisation de la turbomachine (1, 50, 60) suivant l'une des revendications 1 à 13, dans un dispositif (81) d'entraînement tournant horizontalement et/ou verticalement ou dans un dispositif (86) d'entraînement à gouvernail à jet transversal d'un dispositif flottant ou plongeant, notamment d'un navire (80).

17. Utilisation de la turbomachine (1, 50, 60) suivant l'une des revendications 1 à 13, dans un dispositif (84) d'entraînement à jet d'eau ou à jet axial, d'un dispositif flottant ou plongeant, notamment d'un navire (70, 80).

18. Utilisation de la turbomachine (1, 50, 60) suivant l'une des revendications 1 à 13, comme pompe, ventilateur ou compresseur.

19. Utilisation de la turbomachine (1, 50, 60) suivant l'une des revendications 1 à 13 comme turbine, notamment pour produire du courant dans un dispositif flottant ou plongeant ou dans une centrale électrique ou marémotrice.
